(19) Europäisches Patentamt
European Patent Office
Office européen des brevets

(11) Publication number: 0 401 736 A1

(12) **EUROPEAN PATENT APPLICATION**

(21) Application number: 90110597.3

(51) Int. Cl.5: C03C 17/30

(22) Date of filing: 05.06.90

(30) Priority: 06.06.89 JP 142256/89

(43) Date of publication of application: 12.12.90 Bulletin 90/50

(84) Designated Contracting States: AT BE CH DE DK ES FR GB GR IT LI LU NL SE

(71) Applicant: NIPPON UNICAR COMPANY LIMITED
Asahi-Tokai Building 6-1 Ohtemachi
2-Chome
Chiyoda-ku Tokyo 100(JP)

(72) Inventor: Tsubaki, Suguru
2-7-802 Wakabadai, Ashai-Ku
Yokohama-Shi, Kanagawa-Ken(JP)
Inventor: Noda, Isao
2-9-11 Sakuragaoka
Yokoshu-Shi, Kanagawa-Ken(JP)
Inventor: Yonaiyama, Futoshi
2-21-2, Uragaoka
Yokosuka-Shi, Kanagawa-Ken(JP)
Inventor: Katoh, Yoshiaki
1-104, Fujidanamachi, Nishi-Ku
Yokohama-Shi, Kanagawa-Ken(JP)

(74) Representative: Behrens, Dieter, Dr.-Ing. et al
Wuesthoff & Wuesthoff Patent- und
Rechtsanwälte Schweigerstrasse 2
D-8000 München 90(DE)

(54) **A glass container scratch covering agent.**

(57) The invention relates to a glass container scratch covering agent and to a process for producing said glass container scratch covering agent, comprising as a main component a product obtained by reacting in a solvent a colloidal silica with a silicon compound expressed by the following formula

$$\begin{array}{c} R'x \\ | \\ R\text{-}Si(OR'')_{3-x} \end{array}$$

where x is 0 or 1; R is an alkyl group, a vinyl group, a phenyl group, an aminoalkyl group, an acryloxyalkyl group, a methacryloxyalkyl group, glycidoxyalkyl group, polyoxyalkylene or a polyoxyalkylene alkyl group; R′ is an alkyl group or a phenyl group; and R is a lower alkyl group.

EP 0 401 736 A1

# A GLASS CONTAINER SCRATCH COVERING AGENT

## BACKGROUND OF THE INVENTION

### Field of Industrial Uses

This invention relates to a glass container scratch covering agent, and a process for producing the same.

More specifically this invention relates to a glass container scratch covering agent, and a process for producing the same which covers scratches of glass containers, such as beer bottles, beverage bottles, milk bottles, and others, and protect the glass containers from scratches, and the covering film of which does not break in the presence of water on surfaces of the glass containers and can be removed easily in the step of cleaning the containers.

### Prior Art

In Japan, beer, beverages, fruit juice, milk, etc. are distributed to consumers partially in one-way containers, such as metal can, tetra packs, barrels, or others. But they are distributed mostly in glass containers, which are recovered from the consumers for reuses. In their bottling step and/or during their distribution, they collide with, or rub one another or other objects unpreferably to be scratched on the surfaces, with results that their appearances are greatly impaired, and the commodity values of their contents lower.

A countermeasure to this problem is coated bottles having water-resistant permanent coating films formed thereon. But the coating films get scratches during repeated uses of the bottles. This has not been a sufficient countermeasure.

For this reason, it has been prevalently accepted as more secured and economical to treat the scratches on the glass containers wlth covering agents each time when they are recovered for reuses. It is necessary for such scratch corvering agents for such glass containers which have been recovered for reuses to have the following requirements.

a. The agent can cover the scratches on a glass container recovered for reuses to a degree that the exterior of the treated glass container appears as fresh as that of its fresh one.

b. The resultant covering film is as transparent as the glass bottle per se.

c. The resultant film is water-resistant so that the film is not softened or washed away by water, because the glass container is rained during the distribution, cooled in water, or is bedewed on the exterior in refrigerators or storages.

d. The components of the resultant film, when the glass container is cooled in water, do not melt into the water, suspended in the water lest the appearance and clean impression should be impaired or the water should become odorous.

e. The resultant film, during the distribution, is not tacky or slippery, and is not liable to collect dust.

f. The glass container recovered is rinsed with an alkaline solution, and upon rinsing, the resultant film peels off the glass container easily and perfectly.

g. The covering agent generates no volatile components harmful to the human body in the step of applying the covering agent to a recovered glass container.

h. The convering agent can be applied to a glass container at the room temperature (for the purpose of preventing the deterioration of the contents, safety and low treating costs).

i. The covering agent has high scratch resistance.

In order to meet the above-described requirements, a number of proposals have been made. Those proposals are classified into the surfactant group, paraffin group, organic high polymer group, silicone compound group, etc.

But the surfactant group has problems with water-resistance (Requirement (c)), surface tackiness (Requirement (e), etc. The paraffin group has problems with water-resistance (Requirement (c)), suspended components (Requirement (d)), etc. The organic high polymer group has problems with high-temperature coating (Requirement (h), use of solvents (Requirement (g)), etc. Problems common with these groups are involved in the scratch covering (Requirement (a), the transparency (Requirement (b), the peeling with

alkaline solutions (Requirement (f)), etc.

In the silicone group, there have been made a number of proposals. But they do not meet all the Requirements (a) to (i).

To give examples, the silicone group includes silicone oils (Japanese Patent Laid-Open Publication No. 150416/1979) as polysiloxane group, emulsions of mixtures of dimethyl oils and amino oils (Japanese Patent Laid-Open Publication No. 179053/1982), amino oils (Japanese Patent Laid-Open Publication No. 111263/1982), etc. But adversely they have problems with the peeling with alkaline solutions (Requirement (f)), the low curing speed (Requirement (h)), the suspended components (Requirement (d)), etc. On the other hand, there have been proposed a condensate of phenylsilane and methylsilane using various organofunctinal silane condensates (Japanese Patent Laid-Open Publication No. 56040/1981), alkoxy group content silanes (Japanese Patent Laid-Open Publicaton No. 121138/1984), ethenoid acylaminosilanes (Japanese Patent Laid-Open Publicaton No. 151254/1985), condensates of aminosilanes and epoxysilanes (Japanese Patent Laid-Open Publication No. 6152/1986), condensates of alkyl or alkenylsilanes and silicates (Japanese Patent Laid-Open Publicaton No. 27354/1987), and others. They exhibit some improvement in the scrach covering, transparency, etc. compared wlth the polysiloxanes, but the improvement is insufficient.

## OBJECTIVES

An object of this invention is to provide, in view of these problems, a glass container scratch covering agent which can well cover scratches, has transparency equal to glass and water-resistance, does not pollute water, is not tacky, collect no dust, is easily peelable with respect to alkaline solutions, contains no harmful components, can be applied at the room temperature, cannot be scratched, is inexpensive, etc.

More specifically, this invention provides a glss container scratch covering agent which can solve the problems which have not been solved by the prior art, especially the scratch covering, scratch prevention, safe applicatin thereof.

## SUMMARY

The scratch covering agent according to this invention, which uses reaction compounds between the colloidal silica, and silicon compounds with alkoxy groups directly bonded with silicon atoms, can provide glass container scratch covering agent which has advantageous effects of good scratch covering, transparency as high as glass, water resistance, that its components do not pollute water, untackiness, no content of harmful components, film formability at the room temperature, scratch resistance, inexpensiveness, safe working environments, etc.

This is restricted by no specific theory, but the covering agent according to this inventin uses colloidal silica, which has never been conventionally proposed to be used as a component of scratch covering agents. The main component of the colloidal silica is very similar to glass, and the component has particle sizes of 5 mμ -300 mμ. The reaction product between the colloidal silica a nd the silicon compound can provide a covering film having a tickness sufficient to cover the concavities and convex ties of a galss scratch, to prevent irregular reflection a nd doubel refraction to consequently provide superior scratch covering.

## DETAILED DESCRIPTION

The inventors studied causes for the problems of the agent for covering the scratches of the glass containers to be reused and found that the scratch covering has a relatioship with a thickness of the coating film. That is, microscopic observation of a scratch in the surface of a glass container shows that convexties and concavities of some microns to 100 microns are formed in the surface. When a thinner covering film than depths of crests and troughs of the convexties and concavities is applied, lights are irregularly reflected, and consequently white scratches are still noticed. Thus, the prior art silicone scratch covering agents do not form thick films enough to solve the problems.

In taking into consideration that a material whose index of refraction is nearer to that of glass is more capable of preventing the irregular reflection and double refraction of lights, the inventors have selected such materials out of various materials to make experiments and select the effective one this invention is based on.

That is, the glass container scratch covering agent according to this invention contains colloidal silica as a component of a covering agent of the scratches in the glass containers to be reused. which (colloidal silica) has never been used as a major component of the agents.

That is, this invention relates to a glass container scratch covering agent comprising as a main component a product generated by reacting in a solvent a colloidal silica with a silicon compound expressed by the following formula

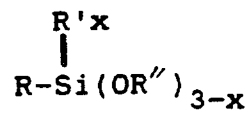

(where x is 0 or 1; R is an alkyl group, a vinyl group, a phenyl group, an aminoalkyl group, an acryloxyalkyl group, a methacryloxyalkyl group, glycidoxyalkyl group, polyoxyalkylene or a polyoxyalkylene alkyl group; $R'$ is an alkyl group or a phenyl group; and $R''$ is a lower alkyl group); a process for producing the glass contaner scratch covering agent according to claim comprising reacting a colloidal silica in a solvent with a silicon compound expressed by the following formula

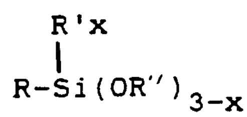

(where x is 0 or 1; R is an alkyl group, a vinyl group, a phenyl group, an aminoalkyl group, an acryloxyalkyl group, a methacryloxyalkyl group, glycidoxyalkyl group, polyoxyalkylene or a polyoxyalkylene alkyl group; $R'$ is an alkyl group or a phenyl group; and R is a lower alkyl group), and then removing the $R''$ OH generated under reduced pressure; a glass container scratch covering agent according to claim 1, wherein polydiorganosiloxane-polyoxyalkylene copolymer is added; a glass container scratch covering agent according to claim 1, wherein an emulsion of polydiorganosiloxane is added; a glass container scratch covering method comprising applying the glass container scratch covering agent according to claim 1, the glass container scratch covering agent prepared by the process according to claim Z, the glass container scratch covering agent according to claim 3, or the glass container scratch covering agent according to claim 4 and forming covering films; and a glass container having the scratches covered by the method according to claim 5.

The colloidal silica used in this invention is silicon dioxide or colloids of its hydrates prepared by reacting silicates with a dilute hydrochloric acid and dialyzing the same. The colloidal silica typically comprises 20 - 40 % of silicic anhydride and less than 0.3 - 0.4 % of soda as sodium oxide, and has pH 9.5 - 10.5, a viscosity equal to or less than 30cp and a specific gravity of 1.10 - 1.40 at 20 °C , and appears transparent opaque, or comprises 20 - 40 % of silicic anhydride and less than 0.05 % of sodium oxide, and has a pH 2 - 4, a viscosity of 5 cp at 25 °C and a specific gravity of 1.10 - 1.20 at 20°C, and appears transparent opaque.

The particles of the colloids has -SiOH groups and $-OH^-$ ions, which form with the alkaline ions an electric double layer, and are stabilized by the repulsion therebetween.

Colloidal silicas are usually marketed as aqueous dispersants, e.g., SNOW TEX (Nissan Kagaku), LUDOX (DuPont), NALKOAG (National Aluminate), CITRON (Monsant Chemical), etc.

The silicon compound used in this inventiona is expressed by the following formula

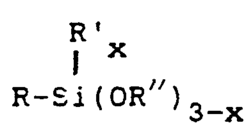

(where x is 0 or 1; R is an alkyl group. a vinyl group, a phenyl group, an aminoalkyl group, an acryloxyalkyl group, a methacryloxyalkyl group or a glycidoxyalkyl group; R′ is an alkyl group or a phenyl group; and R″ is a lower alkoxy(methyl group, ethyl group, or propyl group)). The silicon compound is exemplified by
ethyl trimethoxysilane,
ethyl triethoxysilane,
ethyl tripropoxysilane,
ethyl tributoxysilane,
dimethyl dimethoxysilane,
dimethyl diethoxysilane,
dimethyl dipropoxysilane,
dimethyl dibutoxy,
ehtyl ethyldimethoxysilane,
methyl ethyldipropoxysilane,
methyl trimethoxysilane,
methyl triethoxysilane,
methyl tripropoxysilane,
methyl tributoxysilane,
vivyl trimethoxysilane,
vinyl triethoxysilane,
vinyl tris(β-methoxyethoxy)silane,
γ-methacryloxy propyl trimethoxysilane,
β-(3,4 epoxycyclohexyl)ethyltrimethoxysilane,
γ-glycydoxy propyl trimethoxysilane,
γ-glycydoxy propyl methyldiethoxylsilane,
N-β(aminoethyl)γ-aminopropyl triethoxysilane,
N-β(aminoethyl)γ-aminopropyl triethoxylsilane,
phenyltrimethoxysilane,
γ-aminopropyl triethoxysilane,
γ-aminopropyl methyldiethoxysilane,
γ-aminopropyl ethyldiethoxysilane,
γ-aminopropyl ethyldimethoxysilane,
γ-aminopropyl phenyldiethoxysilane,
2-amino-1-methylethyl triethoxysilane,
N-methyl-γ-aminopropyl triethoxysilane,
N-phenyl-γ-aminopropyl triethoxysilane,
N-butyl-γ-aminopropyl methyldiethoxysilane,
N-β-(aminoethyl)-γ-aminopropyl trimethoxysilane,
N-β-(aminoethyl)-N-β-(aminoethyl)-γ-aminopropyl-trimethoxysilane,
methyl triisopropoxysilane,
ethyl triisobutoxysilane,
ethyl triisopropoxysilane,
ehtyl trilsobutoxysilane,
dimethyl diisopropoxysilane,
dimethyl diisobutoxysilane,
methyl ethylisopropoxysilane,
methyl ethylisobutoxysilane,

$CH_3CH_2(CH_2CH_2O)_{32}Si(OCH_3)_3$,

$H_3CO(C_3H_6O)_{113}Si(OCH_3)_3$,

$CH_3\overset{\overset{O}{\|}}{C}O(CH_2CH_2O)_8OCH_2CH_2CH_2-Si(OCH_3)_3$,

$CH_2=\overset{\overset{CH_3}{|}}{C} - \overset{\overset{O}{\|}}{C}-(CH_2CH_2O)_{12}CH_2CH_2CH_2-Si(OCH_3)_3$,

$HO(CH_2CH_2O)_{132}CH_2\overset{\overset{OH}{|}}{C}HCH_2OCH_2CH_2CH_2-Si(OCH_2CH_2OCH_3)_3$,

$CH_3O(CH_2CH_2O)_{20}(CH_2\underset{\underset{CH_3}{|}}{C}HO)_4CH_2CH_2CH_2-Si(OCH_3)_3$,

$HSCH_2CH_2Si(OCH_2CH_3)_3$;
$HSCH_2CH_2Si)OCH_2CH_3)_3$,
$CH_3O(C_2H_4O)_3\ Si(OCH_3)_3$,
$CH_3O(C_3H_6O)_5\ Si(OCH_3)_3$,
$CH_3O(C_2H_4O)_7\ CH_2CH_2-Si(OCH_3)_3$,
$CH_3O(C_3H_6O)_3\ CH_2CH_2CH_2-Si(OCH_3)_3$, etc.

The agent of this invention may contain tetramethoxysilane, tetraethoxysilane, tetrabutoxysilane, tetraisopropylxysilane, tetraisotoxysilane, etc. expressed by the formula $Si(OR')_4$, or ethylorthosilicate and ethylsilicate 40, tetramers to hexamers of ethylorthosilicate, etc. The reaction solvents used in this invention are water, ethanol, acetone,isopropylalcohol, ethyleneglycol monobutylether, ethyleneglycol, propyleneglycol, ethylglycols, butylglycols, etc. In view of economy and safety, water is preferable.

The mixing ratio of the colloidal silica and the silicon compound (silicic anhydride content) is 1:50 1:0.2. When the ratio of the silicon compound to 1 (one) of the colloidal silica is equal to or higher than 50, the scratch covering is insufficient. When the ratio is equal to or lower than 0.2, the strength of the resultant covering film, and the adhesion thereof to the glass containers become lower. Besides, unpreferably the resultant film tend to be to scratched and has no transparency.

The effective component (solid component) is not especially specified, but when the effective component is 50 % or higher, unpreferably the resultant film does not have an even thickness. When the effective component is 5 % or less, the resultant film is so thin that the covering effect becomes insufficient.

A reaction between the colloidal silica and the silicon compound completes in 1 - 36 hours in the above-described solvent and at a temperature of 0 - 80 °C. The resultant reaction mixture as it is is used as the scratch covering agent, or all or a part of the resultant reaction mixture is used with all or parts of the solvents removed except the water, or the resultant mixture is used with water or other solvents added to.

The addition of polydiorganosiloxane-polyoxyalkylene copolymer to the covering agent of this invention improves the gloss of the resultant covering film and hinders the dust in the air from attaching thereto, and facilitates the covering film peeling off the glass containers when the container are recovered and rinsed with an alkaline solution.

In this invention, the polydiorganosiloxane-polyoxyalkylene copolymer may be known ones described, e.g., in Japanese Patent Publication Nos. 4148/1957, 1147/1958, 24731/1964, 12190/1985, 14000/1968, 16399/1968, 30318/1968, 20916/1970, 14144/1972, 11760/1974, 36960/1974, 39648/1975, 8440/1976 and 28199/1978, and Japanese Patent Laid-Open P ublication Nos. 12746/1972, 32096/1972, 10300/1974, 69795/1974, 35119/1975, 158700/1975, 5757/1977, etc., which are marketed in the trademarks of L-7600, L-7602, L-720, L-700 L-7600, L-7602, L-720, L-7001, L-7002, L-7006, L-7604, L-5310 by Nippon Unicar, and SR CONK by Sginetsu Kagaku, XF-3913 and YF-3842 by Toshiba Silicone, etc.

The addition of an emulsion of polyorganosiloxane to the covering agent of this invention gives lubrication to the resultant covering film, prevents the resultant covering film from being scratched, and

improves the levelling.

The emulsion is prepared by polyoxyethylene-nonylphenylether, and water to dimethyl polysiloxan having a viscosity equal to or less than 10,000 cp at 25 °C and the whole is emulsified by a homomixer.

The scratch covering agent of this invention is applied to glass bottles by known methods. That is, the covering agent is applied manually by means of woven fabric, unwoven fabric, foams, felt, or brushes, applied mechanically by securing the above-described tools to belts, or applied by the dipping process, the spraying process or others.

According to this invention, after the colloidal silica and the silicon compound have been reacted in solvents, in some cases the methanol, ethanol butanol generated under reduced pressure, or the ethanol initially used as a solvent is removed, and in other cases they are not removed. This is because when people are in the working site where the covering agent of this invention is applied to glass bottles, the methanol, ethanol, butanol or the like are harmful to their bodies, and it is impossible to do the applying work. In the case where the applicaton step is mechanical with no operators in the working site, it is not necessary to remove these solvents. The presence of methanol, ethanol, butanol, etc., which are combustible gases, is a problem with accident prevention. The installation for the accident prevention needs a large investment.

The scratch covering agent of this invention may contain as required usually used pigments, dyes, anti-static agents, crosslinking agents, nucleating agents, lubricants, metal powders, antioxidants, UV prohibitors, etc.

Examples of this invention will be explained below, but this invention is not limited to them and covers all the examples using the technical idea of this invention.

## EXAMPLES

### DEFINITION SECTION

*1 SNOWTEX S made by Nissan Kagaku
Silicic anhydride content: 30 - 31 %
Hydrogen ion concentration: 9.0 - 10.5
Particle diameter: 7 - 9 mμ

*2 SNOWTEX 0 made by Nissan Kagaku
Silicic anhydride content: 20 - 21 %
Hydrogen ion concentration: 2 - 4
Particle diameter: 10 - 20 mμ

*3 SNOWTEXOL made by Nissan Kagaku
Silicic anhydride content: 20 - 21 %
Hydrogen ion concentration: 2 - 4
Particle diameter: 40 - 50 mμ

*4: Methyltrietoxysilane, A-162 made by Nippon Unicar
*5: Phenyltriethoxysilane, A-153 made by Nippon Unicar
*6* Dimethyldiethoxysilane, a test product by Nippon Unicar
*7: Vinyltriethoxysilane, A-153 made by Nippon Unicar
*8: γ-aminopropyltrimethoxysilane, A-1100 made by Nippon Unicar
*9: γ-methacryloxypropylsilane, A-174 made by Nippon Unicar
*10: γ-glycidoxypropylsilane, A-187 made by Nippon Unicar
*11: $CH_3(C_3H_6O)_5Si(OH_3)_3$, a test product by Nippon Unicar
*12: $CH_3{(C_2H_4O)_7CH_2CH_2\text{-}Si(OCH_3)_3}$, a test product by Nippon Unicar
*13: Trimethylethoxysilane, a test product by Nippon Unicar
*14: Water
*15: Ethanol
*16: Acetone
*17: Ethyleneglycol monobutylether

The following properties were appreciated on the films applied on recovered rinsed beer bottles with scratches.

*18 Curability:

Apprciated by touch after cured for 1 day at the room temperature.

◎ ... Completely cured.

O ... A little cured and not perfect, but usable.

× ... Insufficiently cured.

*19 Scratch covering:

Visually appreciated after cured for 1 day at the room temperature.

◎ ... Invisibly while scratches were perfectly covered.

O ... While scratches were covered, but the transparency of the applied films were a little insufficient. But they were usable,

× ... While scratches were partially left, and unusable.

*20 Water resistance:

After cured for 3 days at the room temperature, and dipped for 3 days in room-temperature water, the scratch covering of the applied films, and the presence of oil on the surface of the water were visually observed.

◎ ... Scratch covering remaining good, and no oil observed.

O ... Scratch covering remaining good, but the transparency lowered.

× ... Covered white scratches appeared, or oil observed.

*21 Peelability:

After rinsed, visually appreciated.

◎ ... The applied films were beautifully peeled off the beer bottles with no residue.

O ... Took time to peel off.

× ... Partial residue.

*22 Appearance:

After cured for 3 days at the room temperature, visually appreciated.

◎ ... The applied films had smooth and flat surfaces and transparency.

O ... The smooth and flatness a little degraded but usable.

× ... The applied films has a little degraded smooth and flatness and were a little opaque.

*23 Touch:

After cured for 3 days at the room temperature, the surfaces o the beer bottles were appreciated by touch.

◎ ... No tackiness on the surfaces of the films.

O ... A little less slippery but sufficiently usable.

× ... The surfaces of the applied films were tacky.

Example 1

A mixed liquid of 5 weight parts of colloidal silica (SNOWTELX-0 made by NIssan Kagaku), 50 weight parts of methyltriethoxysilane (A-162 made by Nippon Unicar), 10 weight parts of distilled water, and 35 weight parts of ethanol was placed in a glass reactor with a agitator, a reflux condenser, a thermometer, a dropping funnel, etc. and was caused to reflux at 70 °C for 4 hours for the reaction. Then the ethanol was removed under reduced pressure, and a one-litter (1 ℓ) agent was prepared.

Thus prepared agent was applied to the exteriors of glass bottles, and the curability, covering, water-resistance, appearance, touch, etc. were appreciated. The good effects as shown in Table 1 were confirmed.

Examples 2 - 15

The same experiments were made with defferent amounts of the colloidal silica, the silicon compound, the kinds of the solvent and others, and the results were appreciated.

The good effects as shown in Table 1 were appreciated.

Example 16

One hundred (100) weight parts of the reaction product generated by the process of Example 3, and 3 weight parts of polydiorganosiloxane-polyoxyalkylene copolymer

$$(CH_3)_3SiO(CH_3\underset{|}{Si}O)_8[(CH_3)_2SiO]_{75}Si(CH_3)_3$$
$$C_3H_6(OC_2H_4)_{20}(OC_3H_6)_{16}OCH_3$$

were sufficiently agitated and applied to beer bottles.

Compared with the appreciation of Example 3, the flat smoothness was improved, the appearance was beautiful, the gloss was improved, and dust did not tend to stick to the surfaces.

Example 17

One hundred (100) weight parts of the reaction product generated by the process of Example 1, and 5 parts of an aqueous emulsion of dimethylpolysiloxane (prepared by solving 2 parts of polyoxyehtylenenonylphenylether, NP-10 (made by Nikkoh Chemicals) homogenously in 100 parts of distilled water and agitating the resultant solution by a mixer while adding 20 parts of dimethylpolysiloxane thereto) were sufficiently mixed, and the result was applied to vinyl bottles and appreciated.

Compared with the appreciation of Example 1, the smoothness of the applied film was improved, occurrences of scratches were decreased, and the levelling of the surface of the applied film was improved.

Control 1

The same experiment as in Example 1 was conducted. Since trimethylethoxysilane was used as the silicon compound, unpractically the film forming was poor.

Controls 2 and 3

Experiments were conducted by the same process as in the examples. But since no colloidan silica was used, unpractically the scratch covering, appearance, touch, etc were insufficient.

Control 4

The colloidan silica and trimethyltriethoxysilane were used in 60 weight parts and one weight part respectively. The amount of the colloidan silica was excessive, Unpractically all the appreciation items were bad.

Table 1

Unit: Wt%

| | | Examples | | | | | | | | | | | | | | | Controls | | | |
|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 | 3 | 4 |
| Colloidal Silica | *1 | | | | | | | 30 | 30 | 30 | | | | | | 35 | | | | |
| | *2 | 5 | 30 | 60 | | | | | | | 30 | 30 | 30 | 30 | 35 | | 30 | | | 60 |
| | *3 | | | | 30 | 30 | 30 | | | | | | | | | | | | | |
| Silicon Compound | *4 | 50 | 25 | 3 | | | | | | | | | | | 20 | | | 55 | | 1 |
| | *5 | | | | 25 | | | | | | | | | | | 20 | | | | |
| | *6 | | | | | 25 | | | | | | | | | | | | | | |
| | *7 | | | | | | 25 | | | | | | | | | | | | | |
| | *8 | | | | | | | 25 | | | | | 25 | | | | | | | |
| | *9 | | | | | | | | 25 | | | | | | | | | | | |
| | *10 | | | | | | | | | 25 | | | | | | | | | 55 | |
| | *11 | | | | | | | | | | 25 | | | 25 | | | | | | |
| | *12 | | | | | | | | | | | 25 | | | | | | | | |
| | *13 | | | | | | | | | | | | | | | | 25 | | | |
| Solvent | *14 | 10 | 10 | 10 | 10 | 10 | 15 | 30 | 30 | 45 | 40 | 40 | 45 | 45 | 10 | 20 | 10 | 10 | 45 | 35 |
| | *15 | 35 | 35 | 27 | 35 | 35 | 30 | 15 | 15 | | 5 | 5 | | | 15 | | 35 | 35 | | 4 |
| | *16 | | | | | | | | | | | | | | 20 | | | | | |
| | *17 | | | | | | | | | | | | | | | 25 | | | | |
| Appreciation | *18 | ◎ | ◎ | ○ | ◎ | ◎ | ◎ | ◎ | ◎ | ◎ | ◎ | ◎ | ◎ | ◎ | ◎ | ◎ | × | ◎ | ◎ | × |
| | *19 | ◎ | ◎ | ○ | ◎ | ◎ | ◎ | ◎ | ◎ | ◎ | ◎ | ◎ | ◎ | ◎ | ◎ | ◎ | × | × | × | × |
| | *20 | ○ | ◎ | ○ | ◎ | ◎ | ◎ | ◎ | ◎ | ◎ | ◎ | ◎ | ◎ | ◎ | ◎ | ◎ | × | ○ | ○ | × |
| | *21 | ○ | ◎ | ◎ | ◎ | ◎ | ◎ | ◎ | ◎ | ◎ | ◎ | ◎ | ◎ | ◎ | ◎ | ◎ | × | ○ | ○ | × |
| | *22 | ○ | ◎ | ○ | ◎ | ◎ | ◎ | ◎ | ◎ | ◎ | ◎ | ◎ | ◎ | ◎ | ◎ | ◎ | × | × | × | × |
| | *23 | ○ | ◎ | ○ | ◎ | ◎ | ◎ | ◎ | ◎ | ◎ | ◎ | ◎ | ◎ | ◎ | ◎ | ◎ | × | × | × | × |

## Claims

1. A glass container scratch covering agent comprising as a main component a product generated by reacting in a solvent a colloidal silica with a silicon compound expressed by the following formula

$$\begin{array}{l} \quad R'x \\ \quad | \\ R\text{-}Si(OR'')_{3-x} \end{array}$$

(where x is 0 or 1; R is an alkyl group, a vinyl group, a phenyl group, an aminoalkyl group, an acryloxyalkyl group, a methacryloxyalkyl group, glycidoxyalkyl group, polyoxyalkylene or a polyoxyalkylene alkyl group; R′ is an alkyl group or a phenyl group; and R is a lower alkyl group).

2. A process for producing the glass contaner scratch covering agent according to claim 1, comprising

reacting a colloidal silica in a solvent with a silicon compound expressed by the following formula

$$R-\overset{R'x}{\overset{|}{Si}}(OR'')_{3-x}$$

(where x is 0 or 1; R is an alkyl group, a vinyl group, a phenyl group, an aminoalkyl group, an acryloxyalkyl group, a methacryloxyalkyl group, glycidoxyalkyl group, polyoxyalkylene or a polyoxyalkylene alkyl group; $R'$ is an alkyl group or a phenyl group; and R is a lower alkyl group), and then removing the $R''$ OH generated under reduced pressure.

3. A glass container scratch covering agent according to claim 1, wherein polydiorganosiloxane-polyoxyalkylene copolymer is added.

4. A galss container scratch covering agent according to claim 1, wherein an emulsion of polydiorganosiloxane is added.

5. A galss container scratch covering method comprising applying the glass container scratch covering agent according to claim 1, the glass container scratch covering agent prepared by the process according to claim 2, the glass container scratch covering agent according to claim 3, or the glass container scratch covering agent according to claim 4 and forming covering films.

6. A glass container having the scratches covered by the method according to claim 5.

European Patent Office

# EUROPEAN SEARCH REPORT

Application Number

EP 90 11 0597

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 13, no. 145, (C-583), 10th April 1989; & JP-A-63 305 176 (SEIKO EPSON CORP.) * Complete abstract * | 1-6 | C 03 C 17/30 |
| Y | CHEMICAL ASTRACTS, vol. 109, no. 16, October 1988, page 291, abstract no. 133770s, Columbus, Ohio, US; & JP-A-63 117 932 (ASAHI BREWERIES LTD et al.) 21-05-1988 * Complete abstract * | 1-2,5-6 | |
| Y | PATENT ABSTRACTS OF JAPAN, vol. 10, no. 203 (C-360)[2259], 16th July 1986; & JP-A-61 44 971 (TAKEMOTO OIL & FAT CO., LTD) 04-03-1986 * Complete abstract * | 1-2,5-6 | |
| Y,D | FR-A-2 184 024 (UNION CARBIDE) | 1,3-4 | |

TECHNICAL FIELDS SEARCHED (Int. Cl.5)

C 03 C

The present search report has been drawn up for all claims

| Place of search | Date of completion of the search | Examiner |
|---|---|---|
| THE HAGUE | 13-09-1990 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document